(19) Europäisches Patentamt
European Patent Office
Office européen des brevets

(11) **EP 2 674 621 A1**

(12) **EUROPEAN PATENT APPLICATION**

(43) Date of publication:
**18.12.2013 Bulletin 2013/51**

(51) Int Cl.:
*F03G 3/00* [(2006.01)]

(21) Application number: **12171961.1**

(22) Date of filing: **14.06.2012**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(71) Applicant: **Falesiedi, Osvaldo**
**10080 San Benigno Canavese (IT)**

(72) Inventor: **Falesiedi, Osvaldo**
**10080 San Benigno Canavese (IT)**

(74) Representative: **Fiume, Orazio et al**
**Notarbartolo & Gervasi S.p.A.**
**Corso di Porta Vittoria, 9**
**IT-20122 Milano (IT)**

(54) **Inertial traction system**

(57)    Inertial traction system based on counter-rotating masses (W) with a variable arm between a maximum value and a minimum value and rotating with an angular direction equal and opposed between each other in planes at least parallel between each other, comprising at least a rotor in order to keep the rotation of said pair of masses (W), means for varying said arm, controllable decoupling means between said rotor and said pair of masses (W), first control means in order to control at least said means for varying the arm in order to compose the respective centrifugal and/or Coriolis forces of the respective masses in order to generate impulses according to a movement line (V) so that a number or an intensity of said impulses is prevalent with respect to a single direction (I) of said line (V).

Fig. 1

**Description**

**Application field of the invention**

The present invention relates to the field of impulsive traction systems, wherein impulses are generated to move a body.

Description of the prior art

Impulsive movement devices are known which generate impulses along a direction of movement of a body. US5156058 describes a pair of counter-rotating wheels having perimetrally arranged masses which, during the rotation of each wheel, may be moved by increasing or decreasing the eccentricity of the wheels, in order to generate impulsive centrifugal forces which allow the forward movement of the device.

If the eccentricity of the masses was fixed, the impulses obtained would be one towards a direction and the other towards the opposite direction, which, without a difference of friction with the ground according to the two direction, would make the system oscillate back and forth without moving forward.

According to such invention the masses may be moved so that only the impulses in forward direction, and not the opposite one, are generated. Furthermore such device is particularly complex to be realized on an industrial scale. Moreover such device does not consider further effects of the physics, which induce the production of secondary impulses in the opposite direction. Thus its application to vehicles generate remarkable vibrations which worsen its comfort.

Summary of the invention

A first aim of the present invention is to provide a device that is easier to manufacture and to apply on an industrial scale.

The object of the present invention is an inertial traction device according to claim 1.

According to an alternative embodiment of the device, it comprises guides, for example tubular elements, wherein masses are suitable to slide in a controlled way between an extended position, namely near to a first end, and a retracted position, namely near or in the fulcrum of the tubular element, or between a first and a second end of the respective tubular element.

According to the present invention, thanks to the observation of such preferred alternative embodiment of the device herein described, it has been possible to observe that a variation of the moment of inertia of an eccentric mass induces the generation of the Coriolis force.

In particular, a Coriolis force provokes an acceleration of the masses in order to compensate the decrease of centrifugal force/eccentricity, while a Coriolis acceleration provokes a deceleration of the masses in order to compensate an increase of centrifugal force/eccentricity.

Another aim of the present invention is to improve the comfort of a vehicle equipped with such inertial traction device.

Such aim is reached by providing the traction device with means of at least a partial positive and/or negative decoupling, that can be controlled by the masses with respect to the rotor that keeps the masses rotating.

Positive decoupling means that the masses run faster than the rotor and, vice versa, that the rotor runs faster than the masses. In general, the rotor recuperates a predefined step of rotation which preferably coincides with the positive decoupling.

According to a preferred alternative embodiment of the invention both the centrifugal force and the Coriolis force are exploited simultaneously. This is possible by appropriately selecting the extension and retraction quadrants of the masses.

Preferably such controllable decoupling means can be adjustable in the sense described in the following description.

Another object of the present invention is a vehicle comprising the traction device that is object of the present invention.

The claims are an integral part of the present description.

Brief description of the Figures

Further purposes and advantages of the present invention will become clear from the following detailed description of a preferred embodiment (and its alternative embodiments) and the drawings that are attached hereto, which are merely illustrative and non-limitative, in which:

    figures 1-6 show diagrams of plan views of respective operating steps A-D of a device according to the present invention;
    figures 7-9 show the profiles of the centrifugal forces generated by alternative embodiments of the device that is object of the present invention;
    figures 10a and 10b show an alternative embodiment of the device according to the previous figures;
    figures 11 and 12 show an alternative embodiment of the device which show a preferred selection of the extension/retraction quadrants of the masses. In the figures the same reference numbers and letters identify the same elements or components.

Detailed description of preferred embodiments of the invention

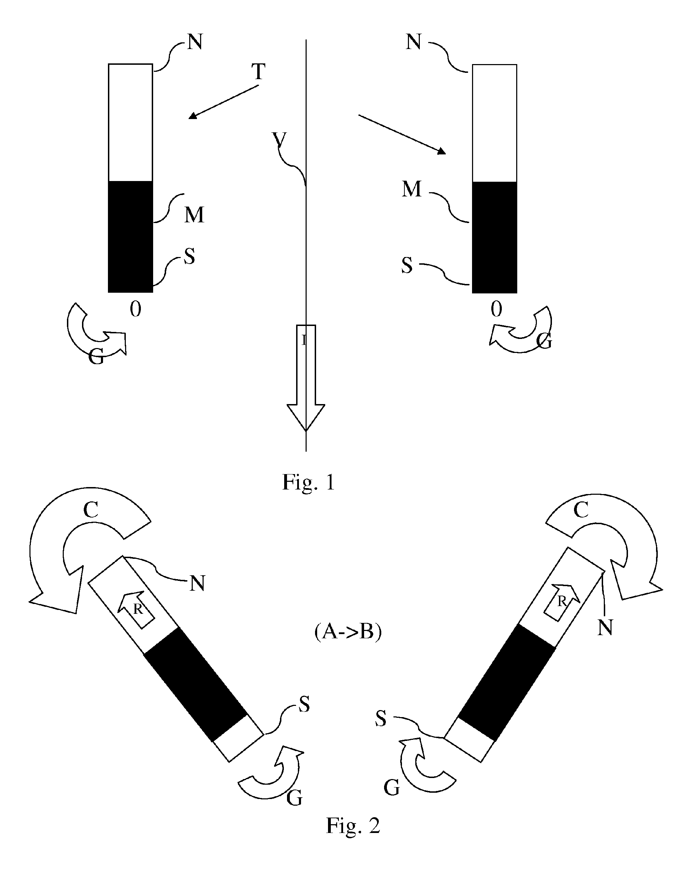

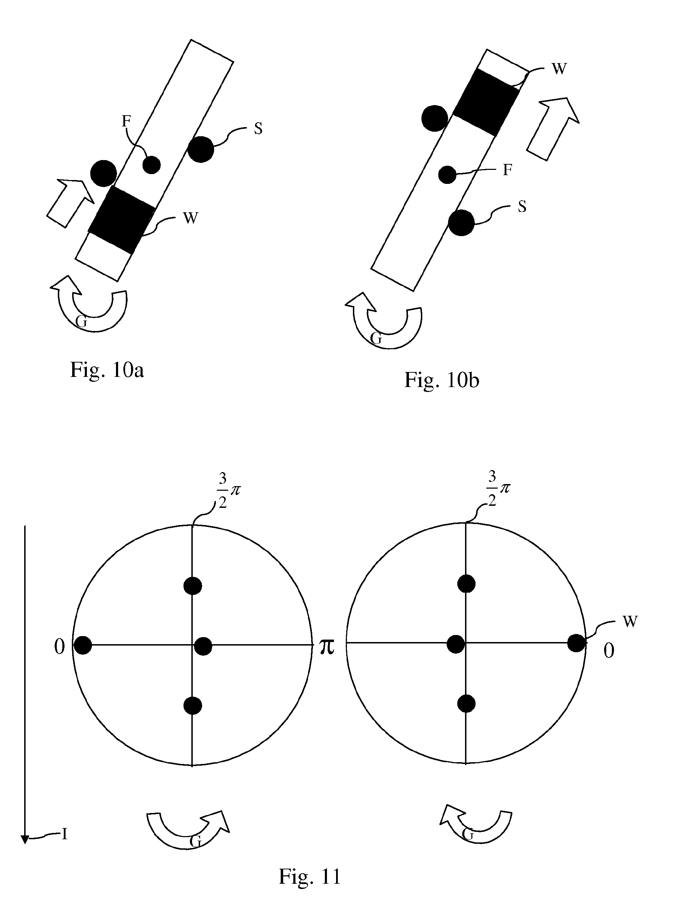

With reference to the figures, a pair of guides, for example hollow tubular bodies T, are provided, in each one of them a sliding mass W is housed and is able to slide in at least a portion of the tubular body T, whose motion, within the respective tubular body, is controllable. The tubular bodies T are made to rotate with respect to a respective median fulcrum in a respective plane of rotation. Such planes of rotation are parallel with each other and preferably coincide. They rotate in a direction one opposite the other, according to the curved arrows G, having the same angular speed and preferably being in the same step. The fulcra may coincide. They are represented separately for a better understanding of the invention. With reference to the diagram of figure 1, in the step (A) the masses T, represented by the black filling, are in extracted position in the proximity of the end S of the tubular body T. They generate an impulse towards the way I according to the movement direction V, being arranged in the proximity of the end S, eccentrically with respect to the median fulcrum F of each tubular body T. The fulcra F are schematized for the sake of simplicity only in figures 10a and 10b.

The eccentric masses W are symmetrically arranged with respect to the movement direction V. According to what is described, the movement of the masses is symmetrical with respect to the direction V.

During a portion of revolution, in the step (A->B) shown in figure 2, the masses are retracted toward the center of the tubular body, in order to nullify or at least to reduce the eccentricity of the assembly TW formed by the tubular body T and the mobile mass W.

The sliding of the mobile mass W may be controlled, for example, by means of an electromagnetic actuation.

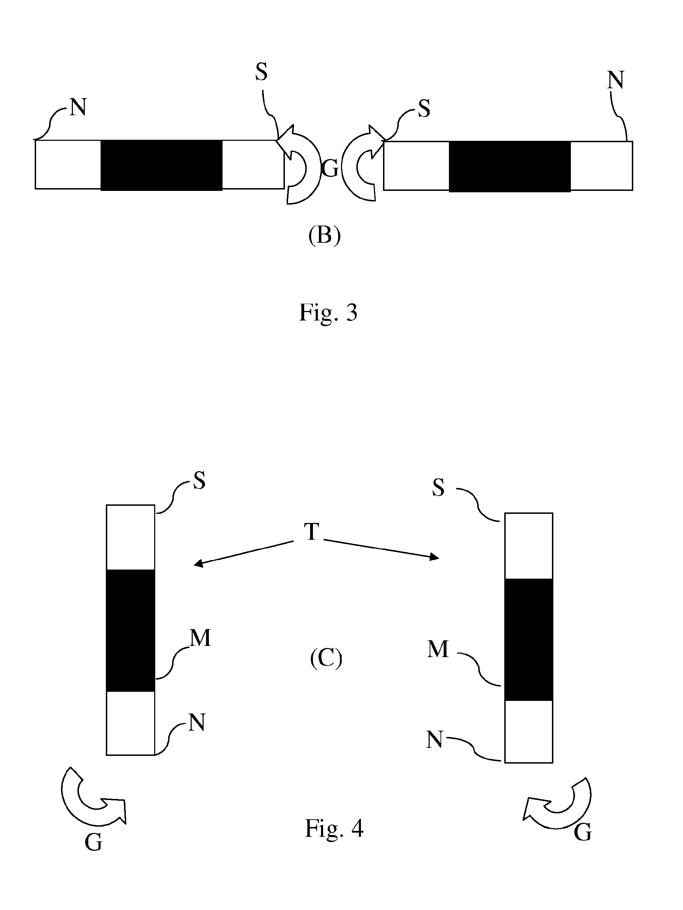

Figures 3 and 4 show the steps B and C wherein the masses W are kept in retracted position.

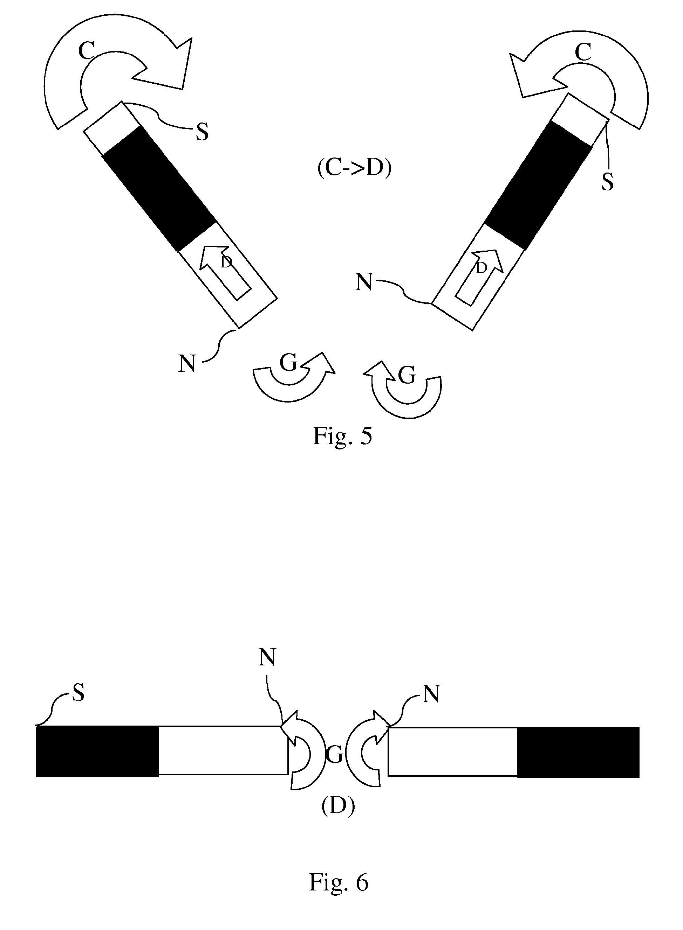

Figure 5 shows the step C->D, wherein the masses W are extended again towards the end S.

Figure 6 shows the step D, wherein the masses W are completely extended in order to repeat the step A shown in figure 1 .

Figures 2 and 5 show the intermediate conditions between the steps A, B and C, D respectively between extension-retraction and vice versa retraction-extension.

From the observation of such intermediate conditions in figures 2 and 5, the generation of Coriolis forces C is evident, namely in the conditions (A->B) and (C->D). Figure 2, in the condition (A->B), show the retraction of the masses W towards the median fulcrum according to the arrows R in order to nullify the eccentricity of the assembly TW.

In such circumstance, Coriolis forces C are generated in a direction concordant with the direction of rotation G of the tubular bodies T.

In figure 5, in the step (C->D), the masses W are extended again towards the end S according to the arrows D.

In such circumstance Coriolis forces C are generated in a direction discordant with the direction of rotation G of the tubular bodies T.

The quadrants chosen for the retraction/extension of the masses W may appropriately vary in order to optimize the efficiency of the system.

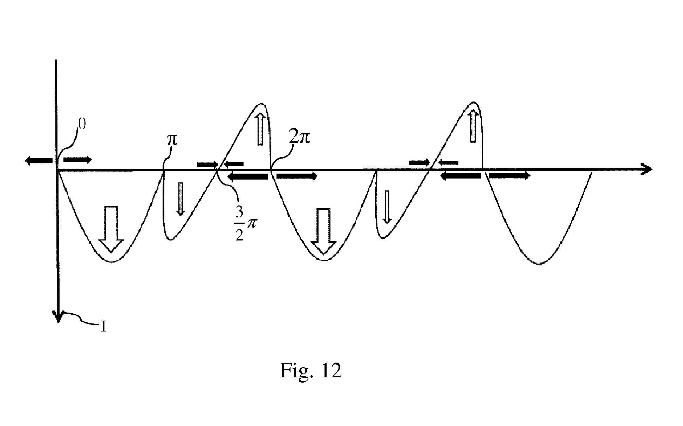

With reference to the figures 11 and 12, an optimal preferred embodiment of the invention is shown, with particular reference to the quadrants selected for the retraction and extension of the masses W.

The device described therein is much simpler to manufacture on an industrial scale than the one shown in US5156058. Furthermore, at least according to the present alternative embodiment, described between figures 1 and 6, which is based essentially on the contribution of the centrifugal force, the same magnetic actuations may give a contribution to obtain the impulse I.

Such operating scheme may be summarized as follows:
in repetitive sequence:

- full extension of the masses W according to said forward movement direction I,
- after a full retraction of the masses within ¼ of the period of rotation, keeping of said retracted condition up to a ½ of the period of rotation and
- full extension of the masses between said ½ and ¾ of period of rotation, in order to keep said extension of the masses up to the completion of the period of rotation.

The operations may be smoother by using a plurality of pairs of rotating tubular bodies T with a phase shift Φ equal to $\dfrac{2\pi}{n}$ wherein $n$ is the number of pairs of rotating tubular bodies.

The tubular bodies are made to rotate preferably by means of a transmission coupling operated by a main motor, preferably an electric motor.

According to a first alternative embodiment of the transmission coupling, the transmission device comprises a free wheel, which allows the tubular body a free anticipation with respect to the axis of the main motor when a Coriolis force concordant with the rotation G occurs. Namely, during the retraction R of the mass W towards the fulcrum of the tubular body T. In this way the Coriolis force can be discharged to the assembly TW without being transmitted to the stator of the main motor and thus to the whole traction system.

As an alternative to the use of the free wheel, a torque control of the main motor is performed, in order to allow the rotor of the motor to accelerate according to the torque generated by the Coriolis force. In the same way, when the Coriolis force is discordant with the direction G of the rotation of the tubular body T, namely during the extension D of the mass W, then the tubular body tends to decelerate. The torque control on the engine can be operated in order to allow such deceleration, simulating the presence of a free wheel, without transferring impulses to the stator of the main motor and thus to the whole traction system.

In this regard, it is possible to avoid transmitting jerks to the stator of the main motor and thus to a ground vehicle comprising the device.

Thus it can be realized that the assembly TW may run faster than the rotor of the main engine which operates the assembly TW when the mass W is retracted and it may decelerate again up to the same speed of the rotor when the mass is extended again.

Another preferred alternative embodiment of the transmission coupling is described with reference to figures 10a and 10b by means of a fork joint S. In figure 10a, the assembly TW is faster than the rotor integral with the fork joint. Vice versa, during the extension of the mass W, see figure 10b, the assembly TW decelerates and the rotor integral with the fork joint S can reach it.

According to a further alternative embodiment, which may combine with the others described above, mechanical damping means may be provided in order to minimize the effects of the Coriolis force, such as resilient pads in the connecting joint between the fulcrum of the tubular body T and the main motor, not shown for the sake of simplicity, or a flywheel integral with the tubular body T.

A torque control of the main motor may be provided, both during the acceleration steps and the deceleration steps of the tubular bodies, or both mechanical damping means and torque control may be provided or both the damping means and the free wheel.

As regards the movement of the mass W that can slide in the tubular element, it is possible, for example, to provide the arrangement of a sequence of annular electromagnets with respect to the tubular body, arranged according to meridians of the tubular body itself T controlled in a sequence as a stepper motor.

In addition to the alternative embodiments described so far, and their respective combinations, a control of the movement of the mobile mass W can be provided, in order to minimize the effects of the Coriolis force, for example by accelerating the mass W according to the arrows R and D by means of acceleration profiles shaped as a linear or not-linear ramp.

According to a further preferred alternative embodiment of the invention, masses W may slide not only between the end S and the fulcrum, but between the end S and the end N of the tubular body T, so that they are active at each $\pi$ rather than at each $2\pi$

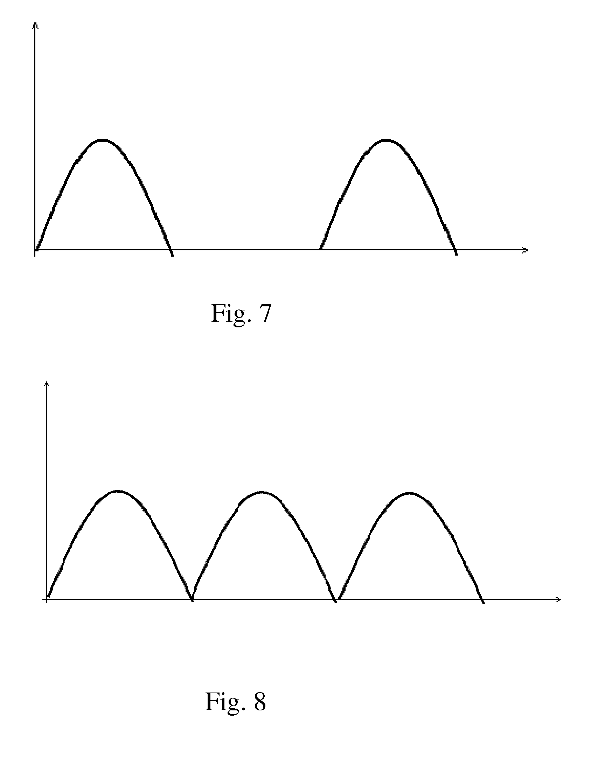

It is evident that the person skilled in the art may also choose two distinct masses W that can slide between the fulcrum of the tubular body and only one of the two ends N and S. Such solution is substantially similar to the one previously shown, but it can have a higher efficiency. Figure 7 shows a temporal trend of the impulses generated by a system formed by a single pair of tubular bodies T wherein the masses extend towards only one of the ends N or S.

Figure 8 shows a temporal trend of the impulses generated by a system formed by a single pair of tubular bodies T wherein the masses can extend only towards both ends N and S.

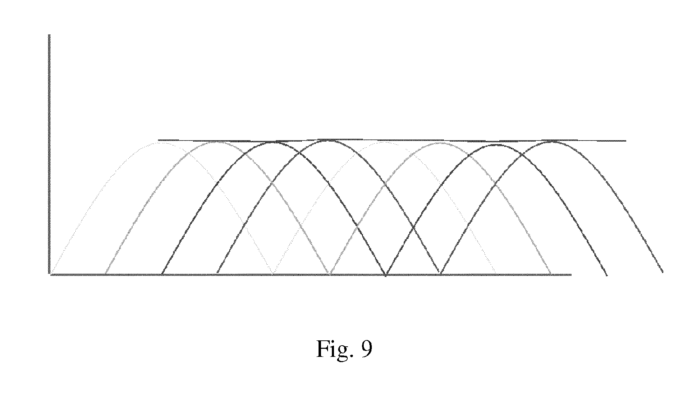

Figure 9 shows an envelope generated by a plurality of impulses generated by tubular pairs with the phase shift described above.

According to another aspect of the invention, the same result can be obtained by retracting the masses W so that the Coriolis force can be composed vectorially in order to obtain such impulse I.

The Coriolis force, during the retraction and extension of the masses is perpendicular, instant by instant, to the guide T, moving forward during the retraction of the mass and backward (with respect to any clockwise or counter clockwise rotation) during its extension.

By appropriately arranging the extension and retraction sectors of the masses it is possible to exploit the vector composition of the Coriolis force between the two counter-rotating masses W. In this way, not only the centrifugal force but also the Coriolis force contributes to the generation of the impulses I.

Figures 11 and 12 show another preferred alternative embodiment of the invention.

Figure 11 show a diagram of the counter-rotating masses illustrated cumulatively in time by means of black circles.

The masses are fully extended when they are opposed, for example externally. It is convenient to indicate such angle by radian 0 in the respective polar diagrams shown herein.

After a rotation of $\pi/2$, the masses are at least partially retracted, preferably in correspondence of half of the radius of the polar diagram.

The effect of the centrifugal force is thus similar but reduced with respect to what is shown in figure 1.

The masses continue their retraction until they reach the position $\pi$. During the retraction the free wheel induces an acceleration of the masses. In the quadrant between $\pi$ and $\dfrac{3}{2}\pi$ Coriolis forces are generated and are able to provoke a deceleration of the guides T, but the main motor does not allow such deceleration, thus such forces are vectorially composed giving a downward oriented resultant, as in figure 1.

In the quadrant $\dfrac{3}{2}\pi$ and $2\pi$ the Coriolis forces are vectorially composed, giving a resultant oriented towards a direction opposed to the preceding one.

The diagram of figure 12 shows the trend of the impulses in time. The first impulse is due to the centrifugal force and is about $\omega^2 r/2$, r indicating the radius of the polar diagram.

The second impulse, concordant with the first one is due to the Coriolis force. The third impulse is opposed to the first two and is due to the Coriolis force, see figure 12. By arranging an appropriate number of pairs of counter-rotating masses, phase shifted between each other, the third impulse can be cancelled.

The control scheme of such alternative embodiment may be summarized as follows:

- full extension of the masses W when they are opposed,
- partial retraction of the masses W in correspondence of ¼ of the period of rotation
- full retraction of the masses after ½ period of rotation
- partial extension of the masses W in correspondence of ¾ of the period of rotation.

In order to reverse the travelling direction of the system, it is sufficient to reverse the rotation G of the masses, or, as an alternative, to shift by $\pi$ radians the phase of the configuration shown in figure 11. In such case, the inertial system will have a number of upward oriented impulses higher than the number of downward oriented impulses. Namely a resultant movement opposed to the previous one indicated by I.

It is thus equivalent to reason in terms of number of useful impulses, namely directed according to I, or in terms of intensity of the impulses. It is worth noting that counting the impulses/intensity, of course, makes sense within a period of full rotation of $2k\pi$.

Figure 12 also shows some horizontal arrows. Such arrows show the retraction and extension forces imposed to the masses W. It may be advantageous to arrange at least a spring in correspondence of the position of full extension, in order to exploit the centrifugal force for the actuation, at least partial, of the retraction of the masses.

Such system, being purely inertial and easy to manufacture, can be applied in different fields: from the satellite orientation system up to the system for moving ground and naval vehicles.

The control of the movement of the masses in the respective tubular bodies and the torque control in the main motor may be managed by an electronic control unit.

The torque control of the main motor may received a feedback by the encoder or by a sensorless control based on the analysis of tensions and currents absorbed by the main motor.

Furthermore, the movement of the masses in the respective tubular bodies may be synchronized and correlated with the torque control of the main motor.

For the sake of simplicity, in the present description the invention has been schematized by long and narrow tubular body T within which masses W can slide. It is evident that the present invention can be obtained by any type of slidable coupling between a mass and a guide substantially long and narrow.

The present invention may be realized by means of a computer program, which comprises program code means performing one or more steps of said method, when said program is run on a computer. For this reason the scope of the present patent is meant to cover also said computer program and the computer-readable means that comprise a recorded message, such computer-readable means comprising the program code means for performing one or more steps of such method, when such program is run on a computer.

From the description set forth above it will be possible for the person skilled in the art to embody the invention with no need of describing further construction details. The elements and the characteristics described in the different preferred embodiments may be combined without departing from the scope of the present application.

**Claims**

1. Inertial traction device comprising

   - at least a pair of masses (W) rotating with respect to a fulcrum (F) with an arm variable between a maximum and a minimum value and rotating with an angular speed equal and opposed between each other in planes at least parallel between each other,
   - at least a rotor in order to keep the rotation of such pair of masses (W),
   - means for varying such arm,
   - controllable decoupling means between said rotor and said pair of masses (W),
   - first controlling means in order to control at least said means for varying the arm in order to compose the centrifugal and/or the Coriolis forces of the respective masses to generate impulses according to a movement line (V) so that a number or an intensity of said impulses is higher in relation to a single direction (I) of said line.

2. Device according to claim 1, wherein the decoupling means comprise a free wheel.

3. Device according to claim 1, wherein the decoupling means are suitable to allow a negative and positive decoupling of the same or of a different angle of the masses (W) with respect to said at least a rotor.

4. Device according to claim 3, wherein the decoupling means comprise a fork joint.

5. Device according to claim 1, wherein said at least a rotor is driven by at least an electric motor.

6. Device according to claim 5, further comprising second control means of the electric motor, suitable to define said controllable decoupling means between said rotor and said pair of masses (W).

7.   Device according to one of the previous claims, comprising a guide (T) wherein/whereon one of said eccentric masses (W) is suitable to slide.

8.   Device according to one of the previous claims, wherein said first and second control means coincide.

9.   Device according to one of the previous claims, wherein said first and second control means are suitable to control the movement of the masses (W) along said guides (T) in a synchronized and correlated way with the torque control of the electric motor.

10.  Device according to one of the previous claims, wherein said first control means are suitable to command a full extension of the masses (W) when they are opposed and to command a full retraction after ½ period of rotation.

11.  Device according to claim 10, wherein said first control means are suitable to command a partial retraction and extension of the masses (W) in correspondence of ¼ and of ¾ respectively of the period of rotation.

12.  First method of extension/retraction of the masses (W) of a device according to one of the claims from 1 to 7, comprising in a repetitive sequence:

> - full extension of the masses (W) according to said forward movement direction (I),
> - after a full retraction of the masses within ¼ of the period of rotation, keep said retracted condition up to a ½ of the period of rotation and
> - full extension between said ½ and ¾ of period of rotation, in order to keep said extension of the masses up to the completion of the period of rotation.

13.  Second method of extension/retraction of the masses (W) of a device according to one of the claims from 1 to 7, comprising in a repetitive sequence:

> - full extension of the masses (W) when they are opposed,
> - partial retraction of the masses (W) in correspondence of ¼ of the period of rotation
> - full retraction of the masses after ½ period of rotation
> - partial extension of the masses (W) in correspondence of ¾ of the period of rotation.

14.  Ground vehicle comprising an inertial traction device according to any of the preceding claims.

15.  Computer program comprising program code means suitable for performing the steps of claims from 13 or 14, when such program is run on a computer.

16.  Computer-readable means comprising a recorded program, said computer-readable means comprising program code means suitable for performing the steps according to claims from 13 or 14, when said program is run on a computer.

N

T

Y

M

S

0

G

I

N

M

S

0

G

Fig. 1

C

N

R

S

G

(A->B)

C

R

N

S

G

Fig. 2

(B)

Fig. 3

(C)

Fig. 4

Fig. 5

Fig. 6

Fig. 7

Fig. 8

Fig. 9

Fig. 10a

Fig. 10b

Fig. 11

Fig. 12

Europäisches
Patentamt

European
Patent Office

Office européen
des brevets

## EUROPEAN SEARCH REPORT

Application Number

EP 12 17 1961

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 5 335 561 A (HARVEY JAMES [US]) 9 August 1994 (1994-08-09) * the whole document * ----- | 1-16 | INV. F03G3/00 |
| A | DE 37 37 776 A1 (ENGEL WILHELM [DE]; ENGEL SUSE [DE]; ENGEL WOLFGANG [DE]; ENGEL KARIN) 14 December 1989 (1989-12-14) * the whole document * ----- | 1-16 | |
| A | FR 2 261 429 A1 (HNC ELECTRONICS LTD [GB]) 12 September 1975 (1975-09-12) * the whole document * ----- | 1-16 | |
| A | US 2002/194939 A1 (COX JAMES EDWARD [US]) 26 December 2002 (2002-12-26) * the whole document * ----- | 1-16 | |
| A | US 2004/050191 A1 (CHUNG BYUNG-TAE [KR]) 18 March 2004 (2004-03-18) * the whole document * ----- | 1-16 | |
| A | FR 1 454 996 A (M. JEAN-CLAUDE KUBIAK) 28 December 1966 (1966-12-28) * the whole document * ----- | 1-16 | TECHNICAL FIELDS SEARCHED (IPC) F03G |
| A | WO 2004/009994 A1 (SEIDAKHANOV URKEN [KZ]; SEIDAKHANOV ISKANDER URKENOVIC [KZ]; SEIDAKHAN) 29 January 2004 (2004-01-29) * the whole document * ----- | 1-16 | |

The present search report has been drawn up for all claims

| Place of search | Date of completion of the search | Examiner |
|---|---|---|
| Munich | 9 November 2012 | Alquezar Getan, M |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04C01)

**ANNEX TO THE EUROPEAN SEARCH REPORT
ON EUROPEAN PATENT APPLICATION NO.**

EP 12 17 1961

This annex lists the patent family members relating to the patent documents cited in the above-mentioned European search report.
The members are as contained in the European Patent Office EDP file on
The European Patent Office is in no way liable for these particulars which are merely given for the purpose of information.

09-11-2012

| Patent document cited in search report | | Publication date | Patent family member(s) | | Publication date |
|---|---|---|---|---|---|
| US 5335561 | A | 09-08-1994 | NONE | | |
| DE 3737776 | A1 | 14-12-1989 | NONE | | |
| FR 2261429 | A1 | 12-09-1975 | FR | 2261429 A1 | 12-09-1975 |
| | | | IT | 1029153 B | 10-03-1979 |
| | | | JP | 50121643 A | 23-09-1975 |
| US 2002194939 | A1 | 26-12-2002 | NONE | | |
| US 2004050191 | A1 | 18-03-2004 | NONE | | |
| FR 1454996 | A | 28-12-1966 | NONE | | |
| WO 2004009994 | A1 | 29-01-2004 | NONE | | |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

• US 5156058 A